# EUROPEAN PATENT APPLICATION

(11) **EP 1 973 293 A1**
(43) Date of publication of application: **24.09.2008**
(21) Application number: 07710983.3
(22) Date of filing: 15.02.2007
(51) Int. Cl.: H04L 29/06

(54) **A PROCESSING METHOD BASED ON MEDIA TYPE AND A NETWORK ENTITY**

(30) Priority: 21.02.2006 CN 200610008385; 04.04.2006 CN 200610075017
(71) Applicant: Huawei Technologies Co., Ltd., Longgang District, Shenzhen Guangdong 518129 (CN)
(72) Inventor: ZHU, Lei, Guangdong 518219 (CN); LUO, Long, Guangdong 518219 (CN)
(74) Representative: Casalonga, Axel
(86) International application number: PCT/CN2007/000565
(87) International publication number: WO 2007/095856

(57) **Abstract**

Embodiments of the present invention provide a method for media-type-based processing and a network entity in a Session Initiation Protocol (SIP) multimedia communication system. The method includes: in response to receiving information, processing, by an information receiver in a SIP multimedia communication system, the information according to a policy and a media type of the information. With the method and the network entity, media data of different media types or signaling messages corresponding to different media types can be processed respectively in the SIP multimedia communication system.

## Description

### Field of the Technology

The present invention relates to a mobile communication system, and more particularly, to a Session Initiation Protocol (SIP) multimedia communication system.

### Background of the Invention

With the development of broadband networks, mobile communications will not be limited to the conventional voice communications, and multimedia services integrating audio, video, picture and text will be developed gradually. Combined with data services such as the Presence services, short messaging, WEB browsing, positioning information, PUSH services or file sharing, mobile communications may meet various demands of users.

With the gradual development of multimedia technologies in communications, SIP multimedia communications may carry a voice service, or a multimedia service such as multiple media types including video flow, picture and text. When multiple media types are introduced into a SIP multimedia communication system, corresponding enhancement and adjustment should be made for the network entities so as to enable the network entities to process multiple media data of varieties of other media types besides the voice media type. However, there is no processing method based on multiple media types in a SIP multimedia communication system at present.

### Summary of the Invention

In view of the above, an embodiment of the present invention provides a method for media-type-based processing and a network entity in a SIP multimedia communication system, in which different media types may be used as criteria for differentiated processing in the SIP multimedia communication system.

A method for media-type-based processing includes: in response to receiving information, processing, by an information receiver in a Session Initiation Protocol (SIP) multimedia communication system, the information according to a policy and a media type of the information.

A network entity in a SIP multimedia communication system in accordance with an embodiment of the present invention includes: a module configured to receive information, and a module configured to process the information according to a policy and a media type of the information.

As can be seen from the above, with the method and the network entity in a SIP multimedia communication system provided by embodiments of the present invention, the network entity may process the media data based on a configured policy, types of the media data and the media type corresponding to the signaling message in response to receiving the media data or the signaling message. Therefore, with the method provided by an embodiment of the present invention, a network entity is enabled to respectively process multiple media data or signaling messages corresponding to different media types, and thus the multimedia experience of users in a SIP multimedia communication system is supported.

### Brief Description of the Drawings

Figure 1 is a schematic diagram illustrating a mode for developing Push to Talk over Cellular (PoC) service;
Figure 2 is a flow chart of the processing of the PoC server set in an automatic answer mode in accordance with an embodiment of the present invention;
Figure 3 is a flow chart of the processing of Manual Answer Override in accordance with an embodiment of the present invention; and
Figure 4 is a flow chart of the processing of Automatic Answer Override in accordance with an embodiment of the present invention.

### Detailed Description of the Invention

Embodiments of the present invention are hereinafter described in detail with reference to the drawings to make the technical solutions and advantages of the present invention clearer.

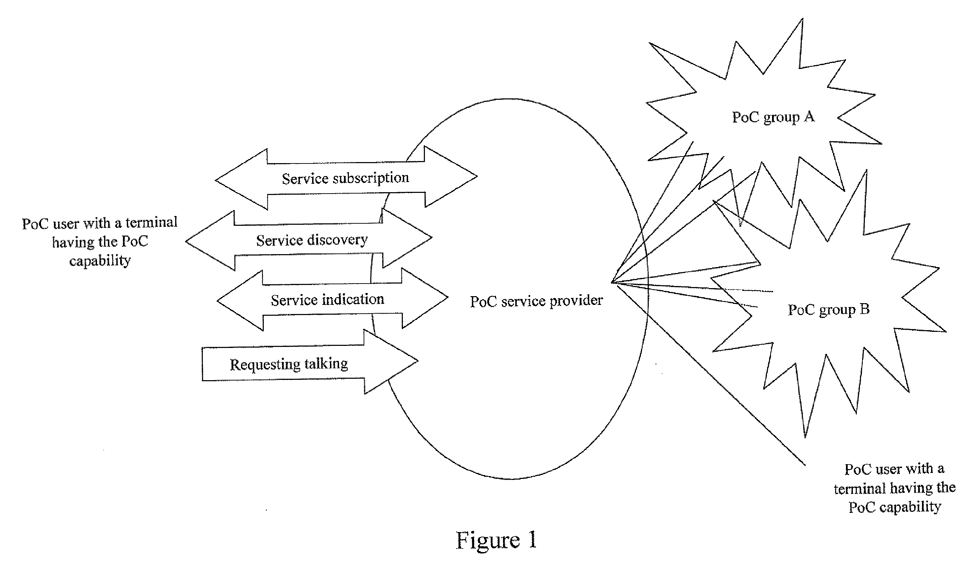

A preferred embodiment of the present invention provides a method for media-type-based processing in a SIP multimedia communication system. In this embodiment, the SIP multimedia communication system may be an Internet Protocol Multimedia Subsystem (IMS), a PoC system or a Conference system. The IMS system is a system provided by the 3^{rd} Generation Partnership Project (3GPP) under the promotion of the existing multimedia applications. The IMS system implements, in the communication network, various multimedia applications based on a packet domain using an open standard structure, therefore providing more choices and richer experience to users. The PoC system is a multi-party multimedia communication system under centralized management. The PoC system is a Push To Talk (PTT) service system defined by the Open Mobile Alliance (OMA) and implemented in a packet-switched network. The PoC system adopts the Voice over IP (VoIP) and the semi-duplex manner, and can meet the real-time communication demands of users at a low cost and high efficiency. Figure 1 is a schematic diagram illustrating applications of the PoC service. As shown in Figure 1, a PoC user needs to subscribe with the PoC service provider through a client with the PoC capability (called a PoC client for short), and obtains the admission for using the PoC service. The PoC user detects, through the PoC client, whether the network has the PoC service capability. If the network has the PoC service capability, the PoC user sets up a connection with other PoC users through the PoC client, the PoC user and the other PoC users connected with the PoC user itself are connected to the same PoC provider. Thereby, multiple PoC clients may request talking through pushing the button. Thus, the PoC service is implemented.

The method for media-type-based processing in a SIP multimedia communication system in accordance with this embodiment is described below. When receiving such information as media data of certain type or a signaling message of certain type (called received information for short), an information receiver, such as some network entities or PoC clients, processes the received information according to a processing policy. The processing policy is configured in the information receiver, and refers to processing manners for the received information of various types by the information receiver. The processing manners are differentiated according to different media types. The different media types may be media types configured by a user, media types which a user has subscribed to, or media types acquired from the media type processing information which is obtained from a received signaling message and/or received media data. Based on the information of the above media types, the information receiver may be triggered to receive a message.

In the case that the above various data of different media types or signaling message indicating the processing manners appears at the same time, according to a processing rule configured by the system in advance or a policy configured by the operator, the priority level of the media type processing information obtained from the received information may be configured as higher than the priority level of the media type processing information configured by the user and the priority level of the media type processing information subscription to by the user. The priority level is determined as the information based on which the media data of various types or a signaling message is processed. In other words, the media type processing information with higher priority is determined as the information based on which the media data of various types or a signaling message is processed. Besides the above manner of configuring the priority level, the subscription information of a user can be used to determine which media type processing information is used as the basis of processing media data of various media types or processing a signaling message. In other words, in the subscription information of a user, the processing information of media data or the processing information of a signaling message may be set as the media type processing information configured by a user, or the media type processing information subscribed to by the user and the media type processing information obtained from the signaling message and/or media data of the system. Or the processing information of media data or the processing information of a signaling message may be a combination of at least one of the above media type processing information.

The method in accordance with this embodiment is hereinafter described in detail with reference to the PoC system. In this example, an information receiver in the PoC system (including a network entity or PoC client in the PoC system) may process the media data or the signaling message according to the media type processing information configured by the user.

In this embodiment, when receiving media data of a certain media type or a signaling message (called received information for short), an information receiver in the PoC system processes the received information according to the media type processing information configured by the user.

In the above method, the information receiver may be a PoC client, a device configured in the network to serve as a PoC client in a session process, or a network entity in the PoC system such as Call Session Control Function (CSCF), Application Server (AS), Multimedia Resource Function (MRF), Session Initiation Protocol Application Layer Gateway (SIP-ALG), Media Gateway Control Function (MGCF), Breakout Gateway Control Function (BGCF), Push-to-Talk over Cellular (PoC) server or Media Gateway (MGW). Preferably, the information receiver is a PoC server.

In the above method, there may be multiple media types to be processed, including one or more of audio, video and discrete media type including picture or text.

The signaling message received by the information receiver may be a SIP request message and the media data received may be a media flow such as a voice flow and a video flow, or discrete media data in the form of picture or text.

In the above method, configuring the media type processing information by the user refers to that the user configures, in the PoC server or other network entities, the media type processing information through a PoC client. The configuring the media type processing information by the user includes:
sending by the PoC client a SIP request message to the PoC server, the SIP request message including the media type processing information to be configured by the user; and
saving by the PoC server the media type processing information and sending an answer message to the PoC client.

Those skilled in the art may understand that, the user can configure the media type processing information in the PoC server through the PoC client with the above processes. Likewise, the user may also configure the media type processing information in other network entities in the PoC system through the PoC client with similar processes. A method for configuring a media type is substantially the same as the above method and thus will not be described herein.

The media type processing information not only includes the media type processing information configured by the user in the network entity, but also includes the media type processing information subscribed to by the user or the media type processing information obtained from the received signaling message and/or media data.

Specifically, the above media type processing information may include information of barring setting based on certain media types, i.e., setting data of one or several media types to be filtered by the PoC server. More specifically, barring the media data of a certain media type may be set in the PoC server, or barring the media data of several media types to be synchronized with each other may also be set in the PoC server. For example, barring the voice media type, the video media type and the discrete media type may be respectively set in the PoC server. After barring has been set for one or several media types of media data, the PoC server filters the media data for which barring has been set based on the media types once receiving media data.

Besides the above barring setting based on media types, the media type processing information may also include information of barring setting based on media data. For example, barring the uplink media data from a PoC client to the PoC server may be set in the PoC server, or barring some media data from other network entities of the network to the PoC server may be set in the PoC server. The media data for which barring is set may be of only one media type or several media types.

Besides the barring setting, the media type processing information may also include setting information of an answer mode of the signaling message of each media type or several media types, that is, setting the answer mode of the signaling message of each media type or several media types as an automatic answer mode or manual answer mode. The automatic answer mode is an answer mode set in the PoC server by a PoC client that a signaling message is automatically accepted in the PoC server. The manual answer mode is an answer mode set in the PoC server by a PoC client that a user performs manual handling in the PoC server. It should be noted that the process of setting the automatic answer mode or manual answer mode may be implemented in a network entity or a PoC client. When setting of an automatic answer mode or manual answer mode is accepted, the identity of the user setting the answer mode may be verified and the answer mode can be accepted after the identity of the user passes the verification.

In this embodiment, the setting the answer mode for a signaling message includes setting the automatic answer mode or manual answer mode for the signaling messages of one or several media types respectively. For example, the answer mode of a session request only with voice media type may be set as the automatic answer mode, while the answer mode of a session request with the video media type may be set as the manual answer mode.

In another embodiment of the present invention, the above setting of an answer mode may be implemented through a signaling message and/or media data. In this embodiment, the signaling message and/or media data also contains information of compelled automatic answer mode or compelled manual answer mode. In this case, in response to receiving a signaling message containing information of the compelled automatic answer mode or compelled manual answer mode, the network entity in the SIP multimedia communication system stores the setting information of an answer mode and processes the signaling message based on the compelled answer mode.

The process of setting the media type processing information is hereinafter described with an example that an automatic answer mode is compelled to be set. In this process, the media type corresponding to a signaling message may include at least one of audio media type, video media type and discrete media type including picture or text. In this embodiment, the answer modes for the signaling messages of the voice media type, the video media type and the discrete media type may be set as the automatic answer mode respectively. In this embodiment, an example is described below that the automatic answer mode is set in a PoC server B for a signaling message of the voice media type and the discrete media type such as text.

A PoC client sends a SIP request message to a network where the PoC client is located. The SIP request message contains information for setting the automatic answer mode for a signaling message of the voice media type and the discrete media type.

The network where the PoC client is located forwards the SIP request message to a PoC server which the PoC client belongs to.

The PoC server saves the information for setting the automatic answer mode for a signaling message of the voice media type and the discrete media type carried in the SIP request message, and sends a SIP 200 OK message to the PoC client through the network where the PoC client is located.

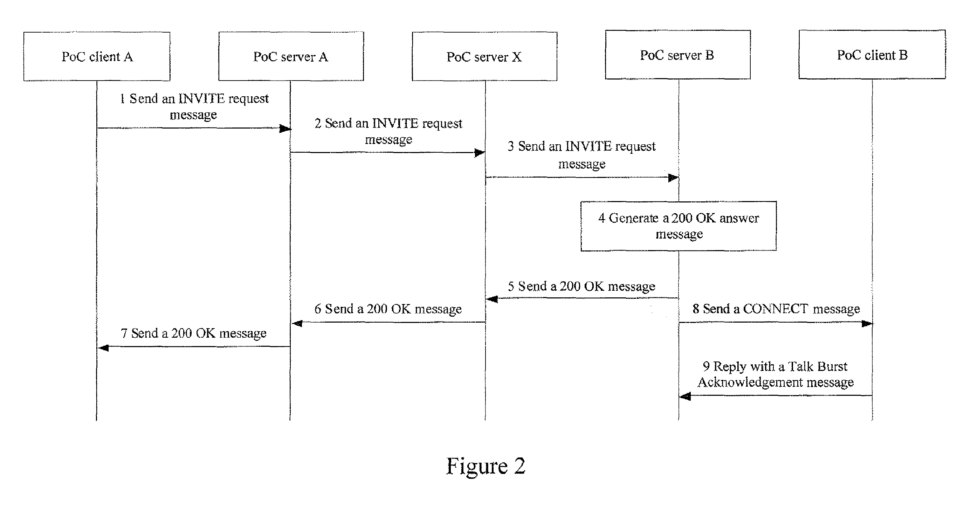

After the above setting, when receiving a signaling message of the voice media type and the discrete media type sent to the PoC client, the PoC server processes the SIP request message using the automatic answer mode. Specifically, if the PoC client sets the automatic answer mode for a signaling message of the voice media type and the discrete media type in the PoC server to which the PoC client belongs, when receiving a signaling message of the voice media type and the discrete media type sent to the PoC client, the PoC server to which the PoC client belongs performs an automatic answer for the PoC client. As shown in Figure 2, this embodiment is described below.

In Actions 1∼2, an inviting PoC client A sends, to a PoC server X which manages a session, an INVITE request message via a PoC server A which the PoC client A belongs to and is concerned with the session.

In Action 3, the PoC server X forwards the INVITE request message to a PoC server B which an invited PoC client B belongs to and is concerned with the session.

In Action 4, according to the setting of an automatic answer for a signaling message of the voice media type and the discrete media type in the PoC server B, the PoC server B directly answers the INVITE request message, generates an answer message, that is, a 200 OK answer message. The 200 OK answer message contains an instruction of answering the voice media type and discrete media type which are contained in the INVITE request message.

In Action 5, the PoC server B sends the 200 OK answer message to the PoC server X.

In Actions 6∼7, the PoC server X forwards the 200 OK answer message to the inviting PoC client A through the PoC server A.

In Action 8, the PoC server B sends a CONNECT message to the invited PoC client B in response to automatically answering the signaling message of the voice media type and the discrete media type.

In Action 9, the invited PoC client B replies with a Talk Burst Acknowledgement message in response to receiving the CONNECT message.

The setting and processing of the manual answer mode for a signaling message are similar to the above setting and processing of the automatic answer mode for a signaling message, thus there is no more description.

In addition, media type processing information for overriding the original setting of a PoC server may also be included in a SIP request message and/or media data. In this case, the PoC server processes the SIP request message according to the media type processing information included in the SIP request message and/or media data, which is hereinafter described in detail with reference to a detailed embodiment.

In an embodiment of the present invention, the media type processing information for overriding the original setting of a PoC server includes: Manual Answer Override (MAO) information and Auto Answer Override (AAO) information.

In this embodiment, when receiving a SIP request message and/or media data including the MAO information, a network entity in a SIP multimedia communication system overrides, based on the MAO information, the manual answer mode set originally for one or several media types in the network entity. Then the network entity in the SIP multimedia communication system sets the answer mode as the automatic answer mode. In this case, when receiving a SIP request message corresponding to the above media types, the network entity answers automatically instead of waiting for a manual answer. When receiving a SIP request message and/or media data including the AAO information, a network entity in a SIP multimedia communication system overrides, based on the AAO information, the automatic answer mode set originally for one or several media types in the network entity. Then the network entity in the SIP multimedia communication system sets the answer mode as the manual answer mode. In this case, when receiving a SIP request message corresponding to the above media types, the network entity processes the SIP request message according to the manual answer mode.

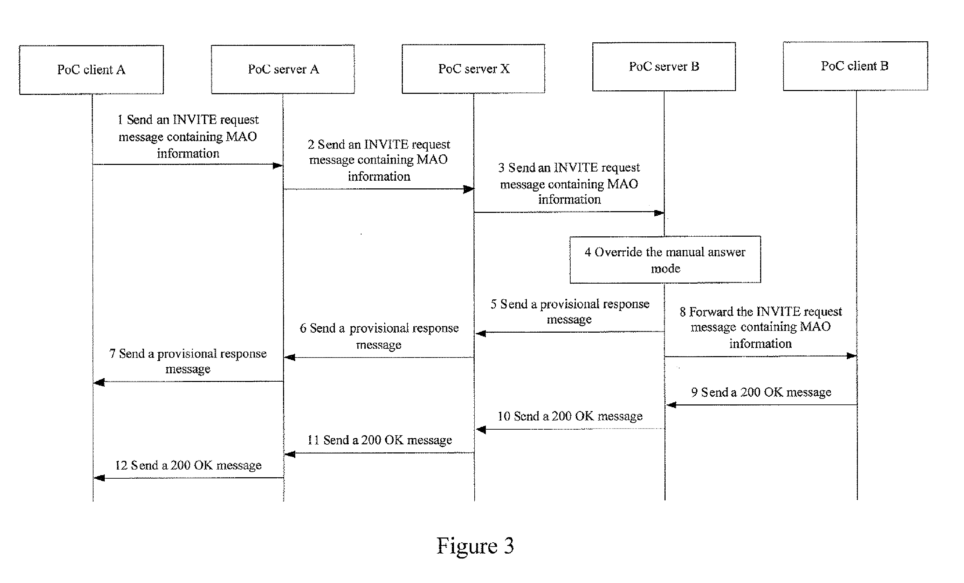

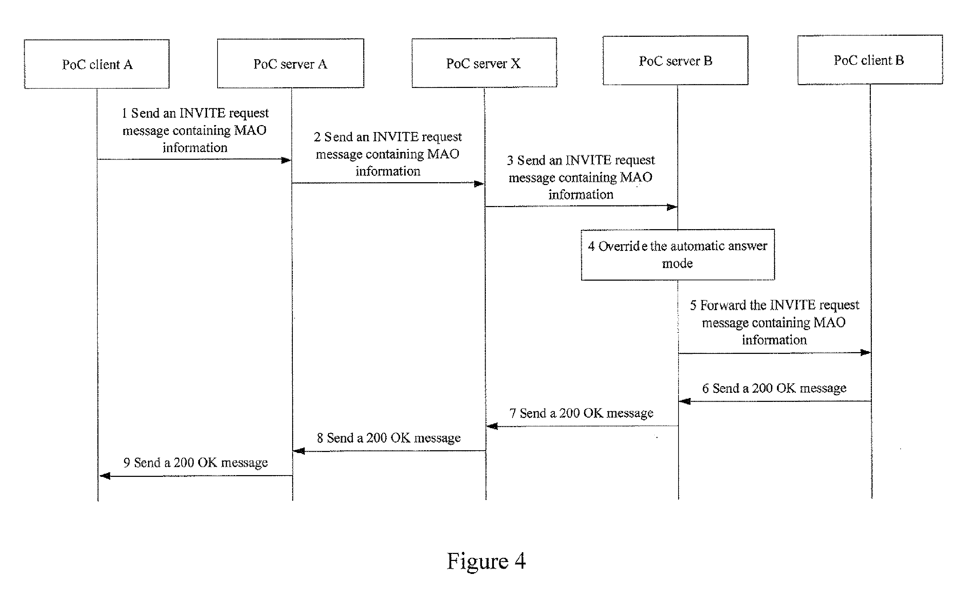

The processes of overriding the manual answer and the automatic answer are hereinafter described with reference to Figure 3 and Figure 4 respectively.

As shown in Figure 3, before the inviting PoC client. A sends a session setup request, the invited PoC client B has set the manual answer mode in the PoC server B which the PoC client B belongs to and is concerned with the session.

In Actions 1∼3, the inviting PoC client A sends an INVITE request message to the PoC server B through the PoC server A which the PoC client A belongs to and is concerned with the session and through the PoC server X managing the session. The INVITE request message includes the MAO information.

In Action 4, the PoC server B overrides, according to the MAO information in the INVITE request message, the manual answer mode set by itself in advance.

In Actions 5∼7, the PoC server B sends a provisional response message generated automatically to the inviting PoC client A through the PoC server X and through the PoC server A because the manual answer mode set in advance is overridden.

In Action 8, the PoC server B forwards the INVITE request message to the invited PoC client B.

In Actions 9∼12, in response to receiving the INVITE request message, the invited PoC client B accepts the INVITE request message, and sends a 200 OK answer message to the inviting PoC client A through the PoC server B, the PoC server X and the PoC server A.

As shown in Figure 4, before the inviting PoC client A sends a session setup request, the invited PoC client B has set the automatic answer mode in the PoC server B which the PoC client B belongs to and is concerned with the session.

In Actions 1∼3, the inviting PoC client A sends an INVITE request message to the PoC server B through the PoC server A which the PoC client A belongs to and is concerned with the session and through the PoC server X managing the session. The INVITE request message includes the AAO information.

In Action 4, the PoC server B overrides, according to the AAO information in the INVITE request message, the automatic answer mode set by itself in advance.

In Action 5, the PoC server B forwards the INVITE request message including the AAO information to the invited PoC client B because the set automatic answer mode is overridden.

In Actions 6∼9, the invited PoC client B accepts the INVITE request message, and sends a 200 OK answer message to the inviting PoC client A through the PoC server B, the PoC server X and the PoC server A.

In the above embodiments, the MAO information and the AAO information may be used to one or several media types or to all the media types, which will be described with reference to several examples.

If the PoC server B receives the MAO information or AAO information for all the media types, the PoC server B overrides the answer modes of all the media types in the PoC server B with the automatic answer mode or manual answer mode. If the PoC server B receives MAO information or AAO information for only one or several media types, the PoC server B overrides the answer modes of the one or several media types with the automatic answer mode or manual answer mode.

Although the above embodiments are described with reference to the PoC system, those skilled in the art may understand that the method is also applicable to a full duplex Conference system or an IMS system. The processes applicable to the full duplex Conference system or the IMS system are similar to that of the PoC system, and thus will not be described herein.

Moreover, because the IMS system saves the subscription information of users, a network entity of the IMS system may obtain the subscription information from the database storing the subscription information of users in the IMS system if subscription information is needed for processing a signaling message and/or media data. The PoC system and the Conference system are IMS-based application systems, and the methods for processing a signaling message and/or media data of network entities in the IMS are similar. The method for processing media types in other multimedia communication systems based on the SIP is similar to that in the PoC system and thus will not be described herein.

The foregoing description is for exemplary embodiments of the present invention and is not for use in limiting the protection scope thereof. All the modifications, equivalent replacements or improvements in the scope of principles of the present invention shall be included in the protection scope of the present invention.

## Claims

1. A method for media-type-based processing, comprising:
in response to receiving information, processing, by an information receiver in a Session Initiation Protocol, SIP, multimedia communication system, the information according to a policy and a media type of the information.

2. The method of Claim 1, wherein the information is media data or a signaling message; and
the policy is a manner for processing the media data or the signaling message by the information receiver.

3. The method of Claim 2, wherein the policy is indicated by media type processing information configured by a user, media type processing information subscribed to by a user, or media type processing information obtained from the signaling message and/or the media data.

4. The method of Claim 3, further comprising:
selecting, based on priority levels, media type processing information with a highest priority level as the policy from the media type processing information configured by a user, or from the media type processing information subscribed to by a user, or from the media type processing information obtained from the signaling message and/or the media data.

5. The method of Claim 3, wherein the media type processing information configured by a user is the media type processing information configured by the user in a network entity in a Push to Talk over Cellular, PoC, system.

6. The method of Claim 5, wherein the media type processing information is configured by the user in the network entity through
sending, by the user through a PoC client, a SIP request message containing the media type processing information to be configured to the network entity;
saving, by the network entity, the media type processing information and sending an answer message to the user.

7. The method of Claim 2, wherein the manner for processing the media data comprises:
barring setting based on a media type or barring setting based on media data.

8. The method of Claim 2, wherein the manner for processing the signaling message comprises:
setting an answer mode for the signaling message.

9. The method of Claim 8, wherein the answer mode is an automatic answer mode or a manual answer mode.

10. The method of Claim 8, wherein the signaling message or the media data received by the information receiver comprises: information of compelled automatic answer mode or compelled manual answer mode.

11. The method of Claim 10, further comprising:
overriding the manual answer mode set by the information receiver itself if the signaling message or the media data received by the information receiver contain Manual Answer Override information; and
overriding the automatic answer mode set by the information receiver itself if the signaling message or the media data received by the information receiver contain Auto Answer Override information.

12. A network entity in a Session Initiation Protocol, SIP, multimedia communication system, comprising:
a module, configured to receive information, and
a module, configured to process the information according to a policy and a media type of the information.

13. The network entity of Claim 12, further comprising:
a module, configured to send, based on priority levels, media type processing information with a highest priority level as the policy from media type processing information configured by a user, or from media type processing information subscribed to by a user, or from media type processing information obtained from the information.

14. The network entity of Claim 12, wherein the information is media data;
the module configured to process the information according to the policy and the media type of the information comprises:
a module, configured to bar the media data based on a media type or media data.

15. The network entity of Claim 12, wherein the module configured to process the information according to the policy and the media type of the information comprises:
a module, configured to perform a compelled automatic answer for the signaling message according to a compelled automatic answer mode included in the information.

16. The network entity of Claim 15, wherein the module configured to process the information according to the policy and the media type of the information further comprises:
a module, configured to override an automatic answer mode set by itself based on Auto Answer Override information contained in the information.

17. The network entity of Claim 12, wherein the module configured to process the information according to the policy and the media type of the information comprises:
a module, configured to perform a compelled manual answer for the signaling message according to a compelled manual answer mode.

18. The network entity of Claim 17, wherein the module configured to process the information according to the policy and the media type of the information further comprises:
a module, configured to override a manual answer mode set by itself based on Manual Answer Override information contained in the information.
